# EUROPÄISCHE PATENTSCHRIFT

(11) **EP 3 495 184 B1**
(45) Veröffentlichungstag und Bekanntmachung des Hinweises auf die Patenterteilung: **11.03.2020**
(21) Anmeldenummer: 18205421.3
(22) Anmeldetag: 09.11.2018
(51) Int. Cl.: B60J 7/12

(54) **FALTVERDECK FÜR EIN CABRIOLET-FAHRZEUG**
FOLDING COVERING FOR A CONVERTIBLE VEHICLE
TOIT DÉCAPOTABLE POUR UN VÉHICULE CABRIOLET

(30) Priorität: 06.12.2017 DE 102017222027
(43) Veröffentlichungstag der Anmeldung: 12.06.2019
(73) Patentinhaber: Magna Car Top Systems GmbH, 74321 Bietigheim-Bissingen (DE)
(72) Erfinder: KAILASAPATHI, Shankar, 70199 Stuttgart (DE); SCHUMACHER, Thorsten, 25495 Kummerfeld (DE)
(74) Vertreter: Völger, Silke Beatrix

(56) Entgegenhaltungen:
- EP-A1- 0 713 796
- EP-A1- 2 067 643
- DE-A1-102013 110 419

## Beschreibung

Die Erfindung betrifft ein Faltverdeck für ein Cabriolet-Fahrzeug.

### Stand der Technik

Faltverdecke für Cabriolet-Fahrzeuge sind in unterschiedlichen Ausführungsvarianten bekannt und verschließen in der Regel eine entlang des Fahrzeugdaches bis in den Heckbereich ragende Dachöffnung. Hierbei ist das Faltverdeck zwischen einer Offenstellung und einer Schließstellung bewegbar ausgeführt, wobei das Faltverdeck ein Verdeckgestänge mit einer Vielzahl von Lenkern, Spriegeln und Bügeln umfasst. Ein Verdeckbezug wird von dem Verdeckgestänge getragen, der in der geschlossenen Position den Fahrzeuginnenraum überspannt. Weiterhin umfasst das Faltverdeck meist einen dem Fahrgastraum zugewandten Innenhimmel, der für eine optische Kaschierung des Verdeckgestänges sorgt.

Ein Bauteil des Verdeckgestänges ist der Spannbügel, der im Heckbereich des Kraftfahrzeugs angeordnet ist und der bei geschlossenem Faltverdeck für eine Spannung des Verdeckbezugs sorgt und in der Schließstellung abgedichtet auf der Fahrzeugkarosserie beispielsweise auf einem Verdeckkastendeckel aufliegt. Der Spannbügel liegt dabei an einer Oberkante eines Verdeckkastendeckels an und weist eine dem Formenverlauf der Oberkante angepasste im Wesentlichen u-förmige Form auf.

Dokument EP2067643 A1 offenbart ein Verdeck eines Cabriolet-Fahrzeugs mit einem heckseitigen Spannbügel. Bei sich öffnendem Faltverdeck schwenkt der Spannbügel aus seiner geschlossenen Dachposition; in eine im Wesentlichen senkrechte Position, damit der Verdeckkastendeckel geöffnet und dabei nach oben geschwenkt werden kann. Der Spannbügel und das Faltverdeck werden hierauf in einen heckseitigen Aufnahmeraum geschwenkt und vom Verdeckkastendeckel abgedeckt.

Um in Schließstellung des Faltverdecks eine wasser- und winddichte Verbindung zwischen Faltverdeck und Fahrzeugkarosserie herzustellen, werden fest mit dem Faltverdeck verbundene Dichtungselemente vorgesehen. Auch das Spannbügelprofil weist eine entsprechende Aufnahme auf, in die ein Teil eines Dichtungselementes einpressbar bzw. fixierbar ist. Des Weiteren muss das Spannbügelprofil bzw. der Spannbügel derart gestaltet sein, dass eine sichere Festlegung des Endbereichs des Verdeckbezugs sowie in der Schließstellung die Erzielung der Stoffspannung erreicht wird. Eine weitere Funktion des Spannbügels ist die Festlegung des hinteren Endbereichs des Innenhimmels.

Zusätzlich werden die für eine motorische Betätigung des Faltverdecks dienenden Leitungen zu einem Kabelstrang zusammengefasst und durch spezielle Halter an dem Spannbügel geführt und gehalten. Diese Halterungen sind beispielsweise als Clipse ausgebildet.

Eine derartige Halterung der Leitungen an dem Spannbügel führt allerdings zu einem Bauraumproblem in der Offenstellung d.h. der Ablageposition des Faltverdecks und erfordert zusätzliche Bauteile und eine aufwendige Montage.

Es ist daher eine Aufgabe der Erfindung ein Faltverdeck für ein Cabriolet-Fahrzeug derart weiterzubilden, das die Halterung der Leitungen an dem Spannbügel hinsichtlich der Montage, der Sicherung und des Bauraums verbessert ist.

Diese Aufgabe wird durch die im Patentanspruch 1 angegebenen Merkmale gelöst.

Durch die Integration der Leitungen in einen entsprechenden Aufnahmekanal in dem Spannbügelprofil, wird kein zusätzlicher Bauraum für eine Halterung der Leitungen benötigt. Weiterhin können die Leitungen auf einfache und schnelle Art und Weise bei der Montage in den Kanal eingelegt und dort gesichert werden. Auf zusätzliche Befestigungselemente und Halterungen kann verzichtet werden.

Insbesondere vorteilhaft ist eine Ausbildung, bei der der Innenhimmel über die Halteleiste mit Anbindungselementen derart an dem Spannbügel angebunden ist, dass das Anbindungselement den Einführschlitz des Kanals abdeckt und an der Unterseite des Spannbügels in Querrichtung anliegt. Hierdurch wird die in dem Kanal angeordnete Leitung zusätzlich abgestützt und in Position gehalten.

Bei den Leitungen kann es sich sowohl um elektrische Steuerleitungen als auch um elektrische Energieversorgungsleitungen oder um eine Leitung zur Mediumsversorgung handeln, sei dies zur motorischen Betätigung des Faltverdecks, etwa einer Betätigung elektrischer, hydraulischer oder pneumatischer Betätigungseinrichtungen, wie beispielsweise Verschlüssen oder zu Zwecken einer Klimatisierung eines Fahrgastraums, einer Beleuchtung, einer Beheizung eines Sichtfensters.

Weiterbildungen der Erfindung sind in den abhängigen Ansprüchen, der Beschreibung sowie den Zeichnungen angegeben.

### Beschreibung der Erfindung

Die Erfindung wird nachfolgend beispielhaft unter Bezugnahme auf die beigefügten Zeichnungen beschrieben.

Es zeigen:
- Figur 1: eine perspektivische Seitenansicht auf eine Dachkinematik bei geschlossenem Verdeck,
- Figur 2: einen Querschnitt durch das Profil eines Spannbügels; und
- Figur 3: einen Schnitt durch einen Spannbügel mit Verdeckbezug, Innenhimmel und Dichtungselement.

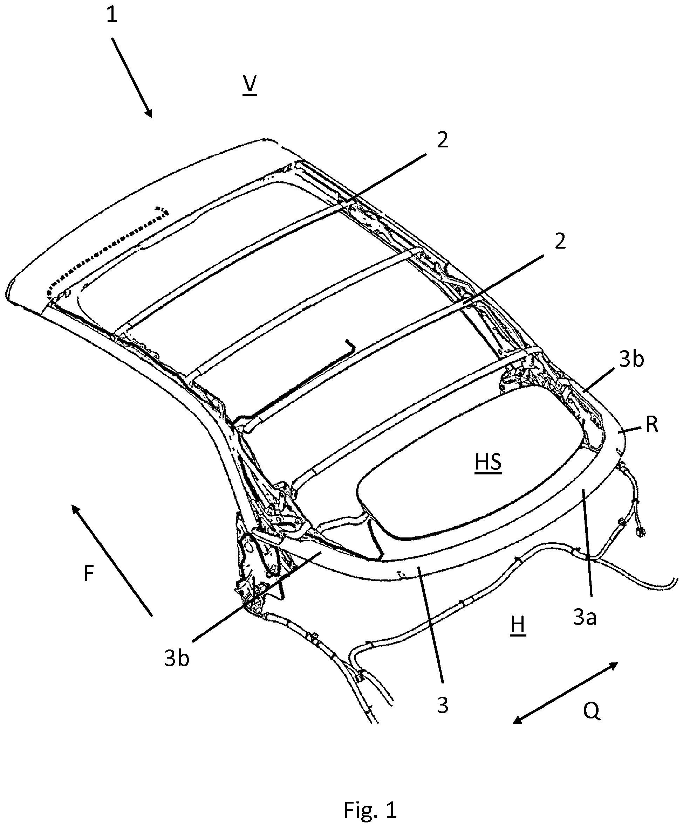

Fig. 1 zeigt in einer perspektivischen Seitenansicht die Verdeckbauteile des Faltverdecks 1 für ein Cabriolet-Fahrzeug in Schließposition. Das Faltverdeck 1 ist im montierten Zustand oberhalb einer Gürtellinie auf eine nicht dargestellte Karosserie eines Cabriolet Fahrzeugs aufgesetzt. Der im Wesentlichen umlaufende Rand R des Faltverdecks bildet hierbei den Auflagebereich zur Fahrzeugkarosserie und ist über Dichtelemente 10 abgedichtet.

Die Fahrzeuglängsrichtung bzw. Fahrtrichtung ist mit dem Pfeil F angezeigt. Das Faltverdeck 1 kann zwischen einer einen Fahrgastraum überspannenden Schließstellung in eine zusammengefaltete Ablagestellung bewegt werden. Das Faltverdeck 1 weist einen Verdeckbezug mit einer Heckscheibe HS auf, der von den Verdeckbauteilen getragen ist. Der Verdeckbezug wird in Querrichtung Q im Wesentlichen von Querspriegeln 2 gestützt, der Verdeckbezug ist zeichnerisch in der Figur 1 nicht dargestellt. Das verstellbare Faltverdeck 1 erstreckt sich ausgehend von einem auf der Vorderseite V angeordneten nicht dargestellten Windschutzscheibenrahmen in einen Heckbereich H des Fahrzeugs. Das Faltverdeck 1 ist bezogen auf eine Mittelachse A symmetrisch aufgebaut. Weiterhin umfasst das Faltverdeck 1 einen dem Fahrgastraum zugewandten Innenhimmel 20, der für eine optische Kaschierung der Verdeckbauteile sorgt. Der Innenhimmel 20 ist in der Figur 1 nicht dargestellt.

Der entgegen der Fahrtrichtung weisende Heckbereich H des Faltverdecks 1 ist schräg nach unten weisend ausgebildet, wobei er in seinem unteren Endbereich durch einen Spannbügel 3 begrenzt wird. Der Spannbügel 3 liegt dabei auf einer Oberkante der Karosserie bzw. der Heckklappe an. Zur Erzeugung der Stoffspannung in der Schließposition und zur Erzielung der notwendigen Formgebung wird der Spannbügel 3 über eine Sturmstange in die den Verdeckbezug 4 spannende Position gedrückt und in dieser Position fixiert. Dieser Spannbügel 3 ist verschwenkbar beiseits an der Fahrzeugkarosserie angebunden und kann über eine horizontale in Querrichtung Q verlaufende Schwenkachsen aus seiner gezeigten Stellung in eine nach oben verschwenkte Stellung geschwenkt werden. Der Spannbügel 3 weist eine im Wesentlichen u-förmige Form auf, und weist einen mittleren in Querrichtung verlaufenden Abschnitt 3a und seitliche Schenkel 3b auf, wobei die Form dem gewünschten Verlauf des Verdeckbezugs 4 im seitlichen und hinteren Bereich entspricht. Der Verdeckbezug 4 ist in geeigneter Weise mit dem Spannbügel 3 verbunden und wird durch den Spannbügel 3 wie obenstehend bereits beschrieben in der Schließposition gespannt.

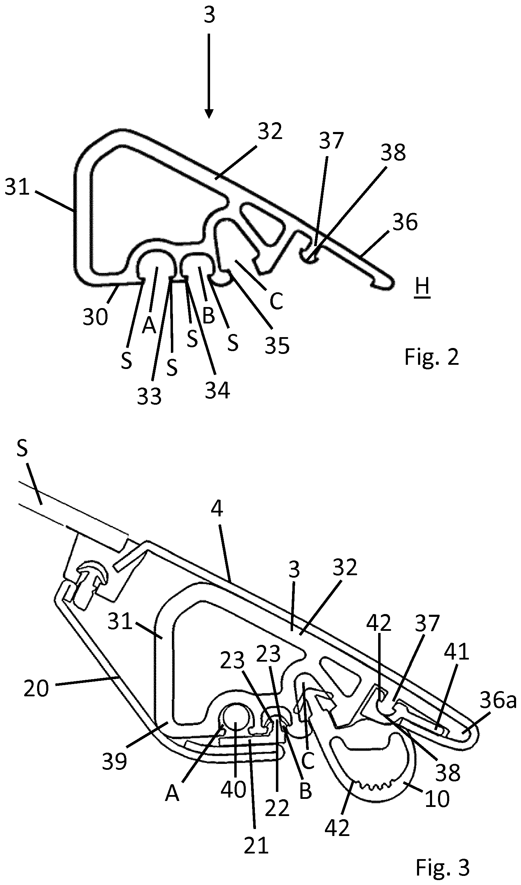

Figur 2 zeigt einen im Schnitt keilförmigen Spannbügel 3, der als Hohlprofil ausgeführt ist. Der Spannbügel umfasst dabei eine Unterseite 30, einen senkrecht verlaufenden Seitenbereich 31 und einen schräg zur Heckseite H nach unten verlaufende Oberseite 32 auf.

Im Bereich der Unterseite 30 des Spannbügels 3 sind benachbart zum Hohlprofil drei Aufnahmeabschnitte A, B, C ausgebildet. Die Aufnahmeabschnitte A, B; C sind als kanalförmige nach unten offene Nuten ausgeführt, die einen im Querschnitt verengten Öffnungsbereich 33, 34, 35 aufweisen. Die Aufnahmeabschnitte A, B, C verlaufen im Wesentlichen parallel zueinander, wobei der Aufnahmeabschnitt A zum Seitenbereich liegend, der Aufnahmeabschnitt C zum Heckbereich weisend und B mittig angeordnet ist. Des Weiteren ist der Spannbügel mit einem an der Oberseite 32 angeordneten Verbindungsabschnitt 36 ausgeführt, der auf der zur Oberseite 32 gegenüberliegenden Unterseite eine stegartige Leiste 37 mit verdicktem Endbereich 38 umfasst. Das Hohlprofil mit Aufnahmeabschnitten und Verbindungsabschnitt 36 ist einstückig ausgebildet.

Der Spannbügel kann aus Metall bevorzugt aus Leichtmetall, weiter bevorzugt aus Aluminium oder einer Aluminiumlegierung, hergestellt werden. Es ist jedoch auch denkbar, dass der Spannbügel aus Kunststoff hergestellt, wird. Aluminium bietet den Vorteil, dass es wesentlich leichter als Stahl ist, und wird bevorzugt zur Herstellung von Strangpressprofilen eingesetzt.

Figur 3 zeigt in einer Schnittdarstellung die Anbindung der Funktionsbauteilen wie dem Dichtungselement 10, dem Verdeckbezug 4, dem Innenhimmel 20, sowie der Aufnahme und Halterung von Leitungen 40 am Spannbügel 3.

Wie es aus der Figur 3 ersichtlich ist, ist der endseitige Bereich des Verdeckbezugs 4 über die Oberseite 32 des Spannbügels 3 und den Verbindungsabschnitt 36 um dessen Endkante 36a auf die Unterseite geführt und dort an der Leiste 37 angebunden. Die Anbindung erfolgt über eine an dem Verdeckbezug befestigte Halteleiste 41, die eine Aufnahme 42 aufweist. Der Verdeckbezug 4 ist über die Aufnahme 42 auf die Leiste 37 mit verdicktem Endbereich aufgepresst und wird an dem Verbindungsabschnitt 36 formschlüssig gehalten.

An dem Spannbügel ist weiterhin der Innenhimmel 20 mit seinem unteren Endbereich befestigt, wobei dieser um einen Eckbereich 39 zwischen Seitenbereich 31 und Unterseite 32 herumgeführt und mittels einer Halteleiste 21 in dem Aufnahmeabschnitt B festgelegt ist. Hierfür ist an der Halteleiste 21 ein im Querschnitt pilzkopfartiger Befefestigungsabschnitt 22 angeformt, der in den Aufnahmeabschnitt B eingeknöpft wird. Der Befestigungsabschnitt 22 weist dabei nach außen und unten gebogene Abschnitte 23 auf, die sich an Schulterabschnitten S des Öffnungsbereichs 34 abstützen. Der Innenhimmel 20 ist weiterhin mit seinem der Heckscheibe HS zugewandten Endbereich über eine Halteleiste mit knopfartigem Körper in eine Aufnahme eines Heckscheibenrahmens eingeclipst gehalten.

Das Faltverdeck 1 liegt im geschlossenen Zustand mit einem Verdeckrandbereich R über ein randseitiges Dichtungselement 10 an einem Karosserieteil, insbesondere Heckdeckel auf. Aus der Schnittdarstellung der Figur 3 kann man ersehen, dass das Dichtungselement 10 einen Grundkörper aus einem gummielastischen Hohlprofil 42 mit einer nach oben ragenden Halteleiste 43 mit einem Kopfabschnitt 44 ausgeführt ist. Der Kopfabschnitt 44 weist dabei schräg nach außen verlaufende Halteabschnitte 45 auf. Wie es aus der Figur zu erkennen ist, ist das Dichtungselement 10 mit dem Kopfabschnitt 44 in den Aufnahmeabschnitt C eingepresst, wobei sich die Halteabschnitte 45 in dem Aufnahmeabschnitt abstützen. Hierdurch wird die Anbindung des Dichtungselementes 10 an den Spannbügel erreicht.

Weiterhin ersichtlich ist, dass in dem Aufnahmeabschnitt A eine Leitung 40 bzw. ein Kabelstrang eingelegt bzw. eingeclipst und hier geführt ist. Eine Sicherung der Leitung 40 in dem Aufnahmeabschnitt A erfolgt zum einen durch den verengten Öffnungsbereich 33 des Aufnahmeabschnitts und zum anderen durch die Anbindung des Innenhimmels 20 mittels der Halteleiste 21 am Spannbügel 3. Im montierten Zustand des Faltverdecks1 gemäß der Darstellung der Figur 3 liegt der Endbereich des Innenhimmels mit Halteleiste an der Unterseite 30 des Spannbügels 3 an und überdeckt den Öffnungsbereich 33 des Aufnahmeabschnitts A, wodurch eine Abstützung der Leitung 40 erfolgt.

## Patentansprüche

1. Verstellbares Faltverdeck (1) für ein Cabriolet-Fahrzeug welches zwischen einer einen Fahrgastraum überspannenden Schließstellung in eine zusammengefaltete Ablagestellung bewegt werden kann, mit einem außenseitig angeordneten Verdeckbezug (4), der von Verdeckbauteilen getragen ist, wobei die Verdeckbauteile zumindest einen heckseitig angeordneten Spannbügel (3) umfassen, und wobei ein endseitiger Bereich des Verdeckbezugs (4) an einem Verbindungsabschnitt (36) des Spannbügels (3) gehalten ist, und mit einem dem Fahrgastraum zugewandten Innenhimmel (20), wobei ein endseitiger Bereich des Innenhimmels in einem Aufnahmeabschnitt (B) des Spannbügels gehalten ist, **dadurch gekennzeichnet, dass** der Spannbügel (3) einen weiteren Aufnahmeabschnitt (A) aufweist, in dem eine elektrische Leitung (40) oder eine Leitung zur Mediumsversorgung aufgenommen und gehalten ist.

2. Verstellbares Faltverdeck (1) für ein Cabriolet-Fahrzeug nach Anspruch 1, **dadurch gekennzeichnet, dass** der Spannbügel (3) ein Hohlprofil aufweist und zumindest eine Unterseite (30) hat, wobei die Aufnahmeabschnitte (A, B) als kanalförmige nach unten offene Nuten mit einem im Querschnitt verengten Öffnungsbereich (33, 34) ausgeführt sind.

3. Verstellbares Faltverdeck (1) für ein Cabriolet-Fahrzeug nach Anspruch 2, **dadurch gekennzeichnet, dass** der Innenhimmel (20) über eine endseitig angeordnete Halteleiste (21) an die ein im Querschnitt pilzkopfartiger Befefestigungsabschnitt (22) angeformt ist, in den Aufnahmeabschnitt B eingeknöpft gehalten wird, wobei die Halteleiste (21) an der Unterseite (30) des Spannbügels (3) anliegt und den Aufnahmeabschnitt (A) überdeckt.

4. Verstellbares Faltverdeck (1) für ein Cabriolet-Fahrzeug nach einem der vorangehenden Ansprüche, **dadurch gekennzeichnet, dass** das Faltverdeck (1) weiterhin ein Dichtungselement (10) umfasst, wobei zur Anbindung des Dichtungselementes (10) ein weiterer Aufnahmeabschnitt (C) als kanalförmige nach unten offene Nut ausgehend von der Unterseite (30) des Spannbügels (3) ausgeführt ist.

## Claims

1. Adjustable folding covering (1) for a convertible vehicle, which folding covering can be moved between a closed position spanning a passenger compartment into a folded together storage position, with a top cover (4) which is arranged on the outer side and is carried by covering components, wherein the covering components comprise at least one tensioning bow (3) arranged on the rear side, and wherein an end-side region of the top cover (4) is held on a connecting portion (36) of the tensioning bow (3), and with a headlining (20) facing the passenger compartment, wherein an end-side region of the headlining is held in a receiving portion (B) of the tensioning bow, **characterized in that** the tensioning bow (3) has a further receiving portion (A) in which an electrical line (40) or a line for supplying a medium is accommodated and held.

2. Adjustable folding covering (1) for a convertible vehicle according to Claim 1, **characterized in that** the tensioning bow (3) has a hollow profile and has at least one lower side (30), wherein the receiving portions (A, B) are designed as channel-shaped, downwardly open grooves with a cross-sectionally constricted opening region (33, 34).

3. Adjustable folding covering (1) for a convertible vehicle according to Claim 2, **characterized in that** the headlining (20) is held clipped into the receiving portion B via a holding strip (21) which is arranged on the end side and on which a fastening portion (22) in the manner of a mushroom head in cross section is integrally formed, wherein the holding strip (21) lies against the lower side (30) of the tensioning bow (3) and covers the receiving portion (A).

4. Adjustable folding covering (1) for a convertible vehicle according to one of the preceding claims, **characterized in that** the folding covering (1) furthermore comprises a sealing element (10), wherein, for the attachment of the sealing element (10), a further receiving portion (C) is designed as a channel-shaped, downwardly open groove starting from the lower side (30) of the tensioning bow (3).

## Revendications

1. Toit décapotable réglable (1) pour un véhicule cabriolet, qui peut être déplacé entre une position de fermeture tendue par-dessus un habitacle de passagers et une position de rangement repliée, comprenant un revêtement de toit (4) disposé du côté extérieur, qui est porté par des composants de toit, les composants de toit comprenant au moins un arceau de tensionnement (3) disposé du côté arrière et une région du côté de l'extrémité du revêtement de toit (4) étant retenue au niveau d'une portion de connexion (36) de l'arceau de tensionnement (3) et comprenant un ciel intérieur (20) tourné vers l'habitacle de passagers, une région du côté de l'extrémité du ciel intérieur étant retenue dans une portion de réception (B) de l'arceau de tensionnement, **caractérisé en ce que** l'arceau de tensionnement (3) présente une portion de réception supplémentaire (A) dans laquelle est reçue et retenue une conduite électrique (40) ou une ligne pour l'alimentation en médium.

2. Toit décapotable réglable (1) pour un véhicule cabriolet selon la revendication 1, **caractérisé en ce que** l'arceau de tensionnement (3) présente un profilé creux et a au moins un côté inférieur (30), les portions de réception (A, B) étant réalisées sous forme de rainures en forme de canal ouvertes vers le bas avec une région d'ouverture (33, 34) rétrécie en section transversale.

3. Toit décapotable réglable (1) pour un véhicule cabriolet selon la revendication 2, **caractérisé en ce que** le ciel intérieur (20) est retenu, de manière encliquetée dans la portion de réception (B), par le biais d'une baguette de retenue (21) disposée du côté de l'extrémité, au niveau de laquelle est façonnée une portion de fixation (22) de type tête de champignon en section transversale, la baguette de retenue (21) s'appliquant contre le côté inférieur (30) de l'arceau de tensionnement (3) et recouvrant la portion de réception (A).

4. Toit décapotable réglable (1) pour un véhicule cabriolet selon l'une quelconque des revendications précédentes, **caractérisé en ce que** le toit décapotable (1) comprend en outre un élément d'étanchéité (10), une portion de réception supplémentaire (C), pour le raccordement de l'élément d'étanchéité (10), étant réalisée sous forme de rainure en forme de canal ouverte vers le bas, à partir du côté inférieur (30) de l'arceau de tensionnement (3).
